# EUROPÄISCHE PATENTSCHRIFT

(11) **EP 2 027 009 B1**
(45) Veröffentlichungstag und Bekanntmachung des Hinweises auf die Patenterteilung: **15.01.2014**
(21) Anmeldenummer: 07729958.4
(22) Anmeldetag: 06.06.2007
(51) Int. Cl.: B62J 1/02

(54) **FAHRRADSATTEL**
BICYCLE SADDLE
SELLE DE VÉLO

(30) Priorität: 09.06.2006 DE 202006009062 U
(43) Veröffentlichungstag der Anmeldung: 25.02.2009
(73) Patentinhaber: RTI Sports Vertrieb von Sportartikeln GmbH, 56070 Koblenz (DE)
(72) Erfinder: ARNOLD, Franc, 56068 Koblenz (DE); TOFAUTE, Kim, 56112 Lahnstein (DE); SCHEFFER, Lutz, 82467 Garmisch-Partenkirchen (DE); CRAFOORD, David, 56070 Koblenz (DE); HEIMERDINGER, Andreas, 56070 Koblenz (DE)
(74) Vertreter: von Kreisler Selting Werner
(86) Internationale Anmeldenummer: PCT/EP2007/055584
(87) Internationale Veröffentlichungsnummer: WO 2007/141299

(56) Entgegenhaltungen:
- WO-A-2005/054045
- DE-A1- 4 104 560
- DE-C- 551 059
- US-A- 604 955
- US-B1- 7 121 622

## Beschreibung

Die Erfindung betrifft einen Fahrradsattel, insbesondere einen Herren-Fahrradsattel, wie sie für Fahrräder, insbesondere Mountainbikes, Rennräder und dgl. verwendet werden.

Fahrradsättel weisen im Allgemeinen im hinteren Bereich des Fahrradsattels ein Sitzteil für das Gesäß eines Fahrradfahrers auf. Das Sitzteil geht in Fahrtrichtung in ein schmales und längliches Vorderteil über. Nachteilig bei einem derartigen Fahrradsattel ist, dass während des Fahrradfahrens von dem Fahrradsattel ein Druck auf den Genitalbereich des Fahrradfahrers ausgeübt wird. Der Druck auf den Genitalbereich ist für den Fahrradfahrer unangenehm und reduziert den Fahrkomfort. Ferner besteht die Gefahr, dass insbesondere bei längerem Fahrradfahren dauerhafte medizinische Probleme bei dem Fahrradfahrer auftreten.

Aus DE 199 32 031 A1 ist es bekannt, das Vorderteil des Fahrradsattels mit dem Sitzteil gelenkig zu verbinden, so dass das Vorderteil des Fahrradsattels zur Vermeidung von Druck im Genitalbereich nach unten weggeklappt werden kann. Nachteilig bei diesem Fahrradsattel ist, dass bei weggeklapptem Vorderteil eine Entlastung im Genitalbereich tatsächlich nicht erreicht wird, Insbesondere ist es nicht möglich, den Fahrradsattel individuell für einen Fahrradfahrer einzustellen.

Ferner sind aus DE 4 104 560 und DE 55 1059 C1 zweiteilige Fahrradsattel bekannt, bei denen das Vorderteil im Wesentlichen vertikal verschiebbar mit dem Sitzteil verbunden ist.

Ferner ist aus DE 20 2004 013 746.1 ein zweigeteilter Fahrradsattel mit einem Sitzteil und einem Vorderteil bekannt, bei dem eine Relativbewegung zwischen Sitzteil und Vorderteil in horizontaler Richtung im Genitalbereich möglich ist. Hierbei ist der Genitalbereich derjenige Bereich des Vorderteils, der in Richtung des Sitzteils weist. Ggf. kann sich der Genitalbereich auch noch in einen in diesem Bereich angeordneten Teilbereich des Sitzteils erstrecken. Die horizontale Lage des Vorderteils gegenüber dem Sitzteil im Genitalbereich ist bei dem in DE 20 2004 013 746.1 beschriebenen Sattel einstellbar. Hierzu sind mit der Unterseite des Vorderteils sowie des Sitzteils zwei stabförmige Elemente verbunden, die in einem Abstand zu der Unterseite verlaufen. Zwischen den stabförmigen Elementen und der Unterseite des Vorderteils sind Abstandselemente angeordnet. Durch Veränderung der Länge der Abstandselemente erfolgte ein Einstellen der horizontalen Lage des Genitalbereichs des Vorderteils des Sattels gegenüber dem Sitzteil des Sattels. Die stabförmigen Elemente weisen einen federnden Charakter auf, so dass das Vorderteil bei entsprechend hohen auftretenden Kräften im Genitalbereich nachgibt. Diese Sattelkonstruktion weist jedoch den Nachteil auf, dass relativ viel Bauraum im Bereich des Sattelgestells benötigt wird, also dass insbesondere flache bzw. niedrigbauende der Sattelgestelle nicht verwendet werden können.

Aufgabe der Erfindung ist es, einen Fahrradsattel, insbesondere einen Herren-Fahrradsattel zu schaffen, mit dem auf einfache Weise ein im Genitalbereich des Fahrradfahrers auftretender Druck reduziert werden kann.

Die Lösung der Aufgabe erfolgt erfindungsgemäß durch die Merkmale des Anspruchs 1.

Erfindungsgemäß ist mit dem Vorderteil ein Federarm fest verbunden. Der Federarm ist über ein Halteelement beweglich mit dem Sitzteil des Fahrradsattels verbunden. Ferner ist ein Elastomerkörper zur Dämpfung der Relativbewegung zwischen dem Vorderteil und dem Sitzteil vorgesehen. Der Elastomerkörper dient ferner zur Erzeugung einer Rückstellkraft, so dass die Lage der beiden Sattelteile zueinander in unbelastetem Zustand stets im Wesentlichen dieselbe ist. Durch das erfindungsgemäße Vorsehen eines Elastomerkörpers können gute

Dämpfungseigenschaften erzielt werden. Insbesondere können die Elastomerkörper austauschbar sein, so dass ein individuelles Anpassen der Dämpfungscharakteristik an die Bedürfnisse des Benutzers möglich ist. Durch das erfindungsgemäße Vorsehen eines mit dem Vorderteil fest verbundenen Federarms kann auf einfache Weise eine Kraftübertragung von dem Vorderteil auf den Elastomerkörper erfolgen. Ein derartiger Federarm, bei dem es sich um ein dünnes Metallteil oder ein entsprechendes Kunststoffteil handeln kann, weist den Vorteil auf, dass es einfach herstellbar ist und nur einen sehr geringen Bauraum erfordert.

Erfindungsgemäß ist ein Dämpfungsarm vorgesehen. Der Dämpfungsarm ist insbesondere mit dem Vorderteil des Sattels verbunden und verläuft in Richtung des Sitzteils. Vorzugsweise ist der Dämpfungsarm über ein gemeinsames Befestigungselement mit dem Vorderteil des Sattels verbunden. Besonders bevorzugt ist es, dass zwischen dem Dämpfungsarm und dem Federarm ein Dämpfungskörper, insbesondere der Elatomerkörper, vorgesehen ist. Vorzugsweise liegt der Dämpfungsarm in unbelastetem Zustand an der Unterseite des Sitzteils an. Sobald Belastungen im Genitalbereich auftreten, wird das Vorderteil im Bereich des Genitalbereichs gegenüber dem Sitzteil relativ bewegt bzw. nach unten gedrückt. Hierbei erfolgt zusammen mit der Bewegung des Vorderteils ein Bewegen des mit dem Vorderteil verbundenen Dämpfungsarms. Über den Dämpfungsarm wird die Kraft auf das Dämpfungselement, insbesondere den zwischen dem Dämpfungsarm und dem Federarm vorgesehenen Elastomerkörper übertragen. Dies ist insbesondere möglich, da der Dämpfungsarm mit dem Sitzteil nicht oder zumindest beweglich verbunden ist, der Federarm in besonders bevorzugter Ausführungsform- jedoch fest mit dem Sitzteil verbunden ist.

Insbesondere kann der Elastomerkörper auch als Halteelement dienen, so dass der Elastomerkörper sowohl die Funktion der Dämpfung als auch die Funktion der Befestigung erfüllt.

In bevorzugter Ausführungsform ist der Elastomerkörper als Druckkörper ausgebildet und dient somit insbesondere zur Aufnahme von Druckkräften. Ein derartiger Elastomerkörper ist somit insbesondere durch Zusammendrücken elastisch verformbar. In besonders bevorzugter Ausführungsform ist hierzu mit dem Sitzteil ein Haltearm verbunden, so dass der Druckkörper zwischen dem Federarm und dem Haltearm angeordnet ist.

In besonders bevorzugter Ausführungsform sind der Federarm und der Dämpfungsarm an einem ersten, insbesondere mit dem Vorderteil des Sattels verbundenen Ende relativ zueinander nicht bewegbar bzw. zueinander stationär. An den zweiten Enden ist der Dämpfungsarm gegenüber dem Federarm bewegbar.

Vorzugsweise ist ein Führungselement vorgesehen, dass mit dem Dämpfungsarm und/ oder dem Sitzteil verbunden ist. Durch das Führungselement ist sichergestellt, dass bei der Bewegung des Dämpfungsarms auftretende Kräfte auf einen ggf. vorgesehenen Elastomerkörper exakt übertragen werden.

Bei den sämtlichen vorstehend beschriebenen Ausführungsformen ist auch ein umgekehrtes Anordnen der Federeinrichtung bezüglich des Vorderteils und des Sitzteils möglich, so dass eine feste bzw. bewegliche Verbindung mit einem der beiden Teile jeweils umgekehrt erfolgt. Bevorzugt sind jedoch stets die vorstehend beschriebenen Ausführungsformen, bei denen insbesondere der Federarm fest mit dem Vorderteil des Sattels verbunden ist.

Nachfolgend wird die Erfindung anhand einer bevorzugter Ausführungsform unter Bezugnahme auf die anliegenden Zeichnungen näher erläutert.

Es zeigen:
- Fig. 1: eine schematische, perspektivische Unteransicht einer Ausführungsform des erfindungsgemäßen Fahrradsattels,
- Fig. 2: eine schematische, perspektivische Seitenansicht des Sitzteils von unten, und
- Fig. 3: eine schematische Schnittansicht in Längsrichtung des Fahrradsattels.

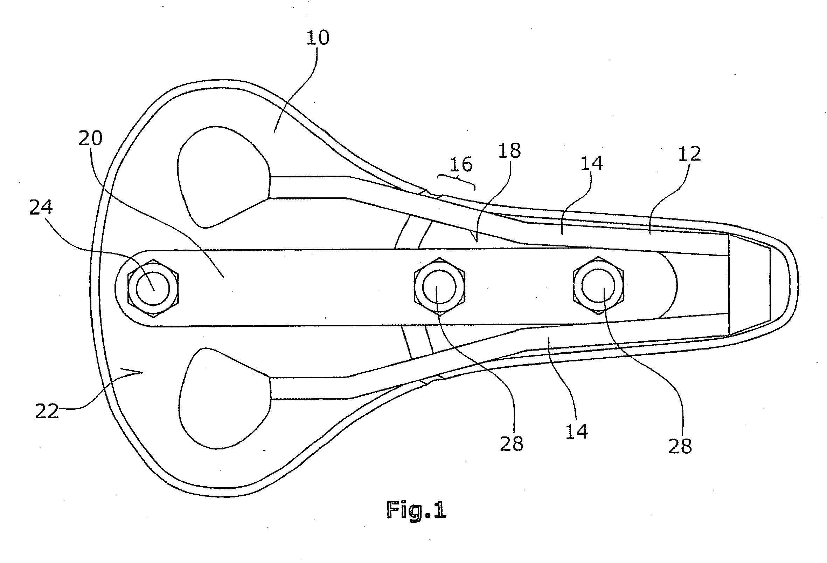

Bei einer ersten bevorzugten Ausführungsform der Erfindung (Fig. 1 - 3) weist der Fahrradsattel ein Sitzteil 10 sowie ein Vorderteil 12 auf. Das Sitzteil 10 weist einen Abstand zu dem Vorderteil 12 auf, so dass es sich um zwei gesonderte Teile handelt. Ggf. können die beiden Teile über ein flexibles Zwischenelement miteinander verbunden sein. Ebenso ist es möglich, dass die Polsterung des Sattels sich sowohl über den Sitzteil als auch das Vorderteil erstreckt und somit den Spalt zwischen den beiden Teilen überspannt. Sowohl mit dem Vorderteil 12 als auch dem Sitzteil 10 sind zwei Streben 14 fest verbunden. Die Streben 14 bilden das Sattelgestell, das über ein Verbindungselement mit dem Sattelrohr verbindbar ist. Das Vorderteil 12 ist gegenüber dem Sitzteil 10 insbesondere in einem in Richtung des Sitzteils 10 weisenden Genitalbereich 16 des Vorderteils 12 in vertikaler Richtung bewegbar.

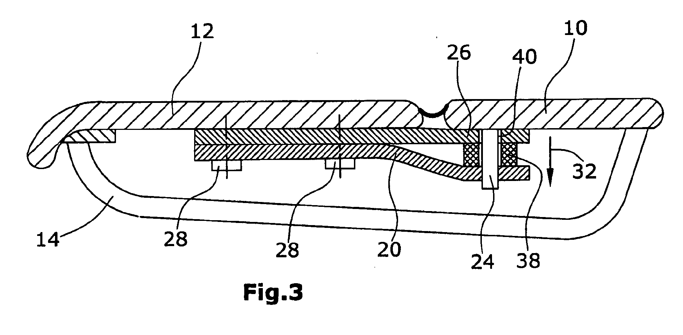

Zur Begrenzung der Bewegbarkeit und um die Bewegung zu dämpfen, ist erfindungsgemäß mit einer Unterseite 18 des Vorderteils 12 ein Federarm 20 fest verbunden. Der Federarm 20 ist in Seitenansicht (Fig. 3) leicht geschwungen bzw. S-förmig ausgebildet und weist gegenüber der Unterseite 22 des Sitzteils 10 einen größeren Abstand als gegenüber der Unterseite 18 des Vorderteils 12 auf. Im dargestellten, besonders bevorzugten Ausführungsbeispiel ist der Federarm über ein Halteelement 24 ebenfalls fest mit dem Sitzteil 10 verbunden. Der Federarm selbst ist elastisch ausgebildet und kann durch Druck im Genitalbereich des Vorderteils 12 des Sattels elastisch verformt werden.

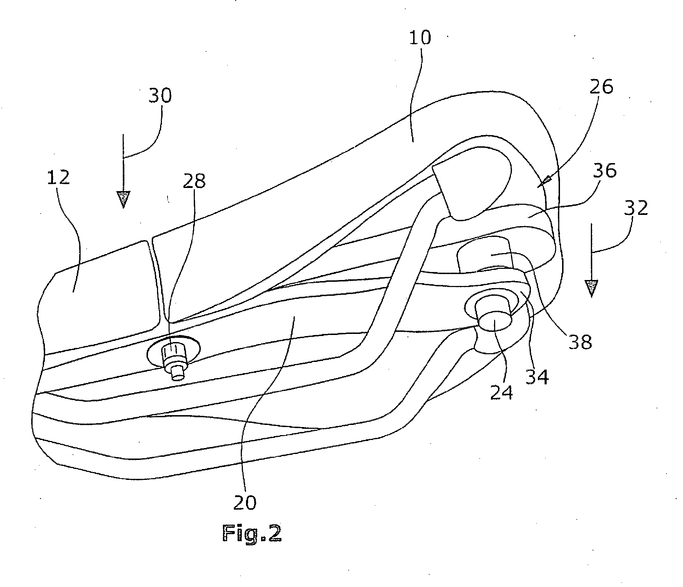

Eine besonders gute Dämpfungscharakteristik kann durch Vorsehen eines Dämpfungsarms 26 erreicht werden. Der Dämpfungsarm 26 ist über gemeinsame Befestigungselemente 28 zusammen mit dem Federarm 20 fest mit dem Vorderteil 12 verbunden. Mit dem Sitzteil 10 ist der Dämpfungsarm 26 nicht bzw. nur beweglich verbunden. Durch Aufbringen einer Kraft 30 im Genitalbereich 16 des Vorderteils 12 wird der Dämpfungsarm 26 in Richtung eines Pfeils 32 (Fig. 2) auf den Federarm 20 zu bewegt. Zur Dämpfung ist zwischen dem Federarm 20 und dem Dämpfungsarm 26 im Bereich der Enden 34 bzw. 36 ein Elastomerkörper 38, der insbesondere zur Aufnahme von Druckkräften dient, angeordnet.

Das Halteelement 24, das zur festen Verbindung des Federarms 20 mit dem Sitzteil 10 vorgesehen ist, dient im dargestellten Ausführungsbeispiel ferner als Führungselement. Hierzu läuft das im dargestellten Ausführungsbeispiel stabförmig ausgebildete Halteelement 24 durch eine Öffnung 40 im Dämpfungsarm 26. Der Dämpfungsarm 26 ist somit bei einer Bewegung in Richtung des Pfeils 32 geführt und kann nicht seitlich ausweichen.

## Patentansprüche

1. Fahrradsattel, insbesondere Herren-Fahrradsattel, mit
einem Sitzteil (10) für das Gesäß eines Fahrradfahrers,
einem Vorderteil (12), das einen dem Sitzteil (10) zugewandten Genitalbereich (16) aufweist, wobei zumindest der Genitalbereich (16) relativ gegenüber dem Sitzteil (10) bewegbar ist,
einem mit dem Sitzteil (10) oder dem Vorderteil (12) fest verbundenen Federarm (20), der über ein Halteelement (24) mit dem Vorderteil (12) oder dem Sitzteil (10) verbunden ist,
einem insbesondere mit dem Vorderteil (12) fest verbundenen Dämpfungsarm (26),
wobei der Federarm (20) und der Dämpfungsarm (26) an einem Ende zueinander statisch sind und am anderen Ende relativ zueinander bewegbar sind, und
einem zwischen dem Dämpfungsarm (26) und dem Federarm (20) angeordneten Elastomerkörper (38) zur Dämpfung der Relativbewegung zwischen dem Vorderteil (12) und dem Sitzteil (10) sowie zum Erzeugen einer Rückstellkraft.

2. Fahrradsattel nach Anspruch 1, **dadurch gekennzeichnet, dass** der Elastomerkörper als Druckkörper (38) ausgebildet ist und insbesondere zwischen einem Haltearm des Halteelements (24) und dem Federarm (20) angeordnet ist.

3. Fahrradsattel nach Anspruch 1 oder 2, **dadurch gekennzeichnet, dass** der Dämpfungsarm (26) über ein gemeinsames Befestigungselement (28) mit dem Vorderteil (12) oder dem Sitzteil (10) insbesondere fest verbunden ist.

4. Fahrradsattel nach einem der Ansprüche 1 bis 3, **dadurch gekennzeichnet, dass** der Federarm (20) und der Dämpfungsarm (26) an einem mit dem Vorderteil (12) verbundenen ersten Ende zueinander statisch sind, insbesondere aneinander anliegen.

5. Fahrradsattel nach einem der Ansprüche 2 bis 4, **dadurch gekennzeichnet, dass** der Federarm (20) am zweiten Ende (34) mittels des Halteelements (24) fest mit dem Sitzteil (10) oder dem Vorderteil (12) verbunden ist.

6. Fahrradsattel nach einem der Ansprüche 1 bis 5, **dadurch gekennzeichnet, dass** der Dämpfungsarm (26) mit dem Sitzteil (10) verbunden ist.

7. Fahrradsattel nach einem der Ansprüche 1 bis 6, **dadurch gekennzeichnet, dass** der Dämpfungsarm (26) eine Öffnung (40) aufweist, durch die ein insbesondere mit dem Sitzteil (10) verbundenes Führungselement (24) zur Führung der Bewegung des Dämpfungsarms (26) vorgesehen ist.

8. Fahrradsattel nach Anspruch 7, **dadurch gekennzeichnet, dass** das Führungselement Teil des Halteelements (24) ist.

9. Fahrradsattel nach einem der Ansprüche 1 - 8, **dadurch gekennzeichnet, dass** der Elastomerkörper (38) zwischen dem Dämpfungsarm (26) und dem Federarm (20) im Bereich der zweiten Enden (34, 36) angeordnet ist.

## Claims

1. A bicycle saddle, in particular a men's bicycle saddle, comprising
a seat part (10) for the backsides of a cyclist, and
a front part (12) with a genital region (16) directed towards the seat part (10), at least the genital region (16) being movable relative to the seat part (10),
a spring arm (20) fixedly connected with the seat part (10) or the front part (12), the spring arm being connected with the front part (12) or the seat part (10) through a retaining element (24),
a damping arm (26) that is fixedly connected in particular with the front part (12),
wherein the spring arm (20) and the damping arm (26) are static with respect to each other at a first end and are movable relative to each other at the other end, and
an elastomeric body (38) arranged between the damping arm (26) and the spring arm (20) for damping the relative movement between the front part (12) and the seat part (10) as well as for generating a restoring force.

2. The bicycle saddle of claim 1, **characterized in that** the elastomeric body is configured as a pressure member (38) and is arranged in particular between a retaining arm of the retaining element (24) and the spring arm (20).

3. The bicycle saddle of claim 1 or 2, **characterized in that** the damping arm (26) is in particular fixedly connected with the front part (12) or the seat part (10) through a common fastening element (28).

4. The bicycle saddle of one of claims 1 to 3, **characterized in that** the spring arm (20) and the damping arm (26) are static with respect to each other, in particular contact each other, at a first end connected with the front part (12).

5. The bicycle saddle of one of claims 2 to 4, **characterized in that** the spring arm (20) has its second end (34) fixedly connected with the seat part (10) or the front part (12) through said retaining element (24).

6. The bicycle saddle of one of claims 1 to 5, **characterized in that** the damping arm (26) is connected with the seat part (10).

7. The bicycle saddle of one of claims 1 to 6, **characterized in that** the damping arm (26) has an opening (40) through which a guide element (24) for guiding the movement of the damping arm (26) is provided, said guide element being connected in particular with the seat part (10).

8. The bicycle saddle of claim 7, **characterized in that** the guide element is part of the retaining element (24).

9. The bicycle saddle of one of claims 1 to 8, **characterized in that** the elastomeric body (38) is arranged between the damping arm (26) and the spring arm (20), especially in the area of the second ends (34, 36).

## Revendications

1. Selle de vélo, en particulier selle de vélo pour homme, avec
une partie d'assise (10) pour les fesses d'un cycliste,
une partie avant (12) qui présente une zone génitale (16) tournée vers la partie d'assise (10), au moins la zone génitale (16) étant relativement mobile par rapport à la partie d'assise (10),
un bras de ressort (20) qui est raccordé fixement à la partie d'assise (10) ou à la partie avant (12) et qui est raccordé à la partie avant (12) ou à la partie d'assise (10) par le biais d'un élément de retenue (24),
un bras d'amortissement (26) raccordé fixement en particulier à la partie avant (12),
le bras de ressort (20) et le bras d'amortissement (26) étant, à une extrémité, statiques l'un par rapport à l'autre et étant, à l'autre extrémité, mobiles relativement l'un par rapport à l'autre, et
un corps en élastomère (38) qui est disposé entre le bras d'amortissement (26) et le bras de ressort (20) et qui est destiné à amortir le mouvement relatif entre la partie avant (12) et la partie d'assise (10) ainsi qu'à générer une force de rappel.

2. Selle de vélo selon la revendication 1, **caractérisée en ce que** le corps en élastomère est réalisé en tant que corps de pression (38) et est en particulier disposé entre un bras de retenue de l'élément de retenue (24) et le bras de ressort (20).

3. Selle de vélo selon la revendication 1 ou 2, **caractérisée en ce que** le bras d'amortissement (26), par le biais d'un élément de fixation (28) commun, est raccordé, en particulier fixement, à la partie avant (12) ou à la partie d'assise (10).

4. Selle de vélo selon une des revendications 1 à 3, **caractérisée en ce que** le bras de ressort (20) et le bras d'amortissement (26) sont statiques l'un par rapport à l'autre à une première extrémité raccordée à la partie avant (12), en particulier se jouxtent l'un l'autre.

5. Selle de vélo selon une des revendications 2 à 4, **caractérisée en ce que** le bras de ressort (20), à la deuxième extrémité (34), est raccordé fixement à la partie d'assise (10) ou à la partie avant (12) par le biais de l'élément de retenue (24).

6. Selle de vélo selon une des revendications 1 à 5, **caractérisée en ce que** le bras d'amortissement (26) est raccordé à la partie d'assise (10).

7. Selle de vélo selon une des revendications 1 à 6, **caractérisée en ce que** le bras d'amortissement (26) présente une ouverture (40) à travers laquelle est prévu un élément de guidage (24), raccordé en particulier à la partie d'assise (10), pour le guidage du mouvement du bras d'amortissement (26) .

8. Selle de vélo selon la revendication 7, **caractérisée en ce que** l'élément de guidage est une partie de l'élément de retenue (24).

9. Selle de vélo selon une des revendications 1 à 8, **caractérisée en ce que** le corps en élastomère (38) est disposé entre le bras d'amortissement (26) et le bras de ressort (20) dans la zone des deux extrémités (34, 36).
